# EUROPÄISCHE PATENTSCHRIFT

(11) **EP 2 360 036 B1**
(45) Veröffentlichungstag und Bekanntmachung des Hinweises auf die Patenterteilung: **30.03.2016**
(21) Anmeldenummer: 11150679.6
(22) Anmeldetag: 12.01.2011
(51) Int. Cl.: B60G 7/00, F16B 11/00

(54) **Kraftfahrzeugbauteil und Verfahren zu seiner Herstellung**
Motor vehicle component and method for its production
Composant de véhicule automobile et son procédé de fabrication

(30) Priorität: 12.02.2010 DE 102010007945
(43) Veröffentlichungstag der Anmeldung: 24.08.2011
(73) Patentinhaber: Benteler Automobiltechnik GmbH, 33102 Paderborn (DE)
(72) Erfinder: Hessing, Florian, 80809 München (DE); Meyer, Stephan, 33605, Bielefeld (DE); Binfet, Ernst, 33189, Schlangen (DE)
(74) Vertreter: Griepenstroh, Jörg

(56) Entgegenhaltungen:
- DE-A1- 19 721 478
- DE-A1-102006 051 609
- DE-A1-102007 022 297
- US-A1- 2010 294 420

## Beschreibung

Die Erfindung betrifft ein Kraftfahrzeugbauteil in Form eines Lenkers eines Fahrwerks, aus mehreren miteinander zu verbindenden Bauteilkomponenten gemäß den Merkmalen im Oberbegriff des Patentanspruchs 1.

Kraftfahrzeugbauteile sollen in der Regel leicht sein, um das Fahrzeuggesamtgewicht so gering wie möglich zu halten. Zudem müssen sie günstig in der Serienfertigung sein. Selbstverständlich wird eine hinreichende Stabilität gefordert, was insbesondere im Bereich des Fahrwerks zu Zielkonflikten führt. Jedoch sind gerade im Bereich des Fahrwerks besonders leichtbauende Komponenten von Vorteil, da durch ein reduziertes Bauteilgewicht die ungefederten Massen reduziert werden können, was sich positiv auf das Federungsverhalten und den Fahrkomfort des Fahrzeugs auswirkt.

Beispielsweise werden Lenker eines Fahrwerks eines Kraftfahrzeuges aus mehreren Blechschalen zusammengesetzt, die in ihrer Geometrie exakt an die zu erwartende Belastung angepasst und hinsichtlich der zu erwartenden Bauteilspannung optimiert ausgelegt sind. Bei aktuellen Lenkerkonzepten wird hauptsächlich auf das Fügeverfahren Schweißen gesetzt. Bekannt ist es, gegengleiche Lenkerschalen durch Punktschweißen zu verbinden. Allerdings stehen den relativ kurzen Fertigungszeiten beim Punktschweißen erhöhte Fertigungskosten gegenüber, welche sich aus den einzelnen Schweißkabinen, den zur Schweißung verwendeten Robotern und der daraus resultierenden fortlaufenden Wartung zusammensetzen.

Die DE 10 2006 051 609 A1 offenbart einen radführenden Lenker für ein Fahrzeug, der aus Schalenelementen zusammengesetzt ist, die im Bereich von Kontaktflächen miteinander verbunden sind und an wenigstens einem Kontaktpunkt formschlüssig durch Kaltfügeverfahren oder aber auch stoffschlüssig durch Schweißverbindungen gefügt sind. Die als Lenkerschalen ausgeführten Bauteilkomponenten besitzen einen im Querschnitt U-förmig gestalteten Mittelteil mit von den Kontaktflächen wegweisenden randseitigen Umstellungen. Die Kontaktflächen beginnen im Abstand von den Umstellungen, wobei zwischen den als Lenkerschalen ausgebildeten Bauteilkomponenten randseitig der Kontaktflächen ein Spalt ausgebildet ist.

Durch die DE 10 2008 003 552 A1 zählt ein Verfahren zum Verbinden von Bauteilen in Hybridbauweise zum Stand der Technik, bei welchem Klebstoff verwendet wird. Die Klebeschichtdicke wird durch bestimmte Abstandslaschen festgelegt. Bei den zu verbindenden Bauteilen handelt es sich insbesondere um Gussknoten aus Leichtmetall oder Stahl, die mit Profilbauteilen, wie Rohren aus Leichtmetall oder Stahl, verbunden werden sollen. Bei dieser Materialpaarung sind stoffschlüssige Verbindungen schwierig, so dass angeregt wird, beispielsweise selbstschneidende Schrauben zu verwenden, um die Bauteile zueinander punktuell zu fixieren. Der Klebstoff kann vor dem Einbringen von mechanischen Fügeelementen oder auch nach dem Einbringen der mechanischen Fügeelemente in den Klebstoffspalt angebracht werden. Der Klebstoff muss dann in einem separaten Vorgang aushärten.

Der Erfindung liegt die Aufgabe zugrunde, ein Kraftfahrzeugbauteil in Form eines Lenkers eines Fahrwerks aus mehreren miteinander zu verbindenden Bauteilkomponenten, hinsichtlich der Fügung zu verbessern, um einerseits das Gewicht des Fahrzeugbauteils zu reduzieren und andererseits dessen Handhabung im Fertigungsprozess zu vereinfachen.

Die Erfindung löst diese Aufgabe mit einem Kurftfahrzeugbauteil gemäß den Merkmalen des Patentanspruchs 1.

Das Kraftfahrzeugbauteil, d. h. der Lenker setzt sich aus mehreren miteinander zu verbindenden Bauteilkomponenten zusammen, die mit folgenden Fertigungsschritten miteinander verbunden werden:
Zunächst wird ein Klebstoff auf wenigstens eine der Bauteilkomponenten aufgetragen. Anschließend werden die miteinander zu verbindenden Bauteilkomponenten im Bereich von Kontaktflächen unter Ausbildung eines Klebespaltes durch den Klebstoff miteinander verklebt. Die Kontaktflächen werden unter Ausbildung eines Klebstoffspaltes positioniert. Der Spalt kann sehr klein sein, so dass sich die beiden Kontaktflächen punktuell berühren. Die punktuelle Berührung dient der Einstellung des Klebspaltes. Allerdings ist der Klebstoff unmittelbar nach dem Positionieren der Bauteilkomponenten noch nicht hart genug, dass er die Bauteilkomponenten hinreichend fest miteinander verbinden könnte.

Daher werden die so positionierten und über den Klebstoff in Kontakt stehenden Bauteilkomponenten an wenigstens einem Kontaktpunkt miteinander kraft-, form-und/oder stoffschlüssig gefügt. Auf diese Weise sind die Bauteilkomponenten nicht nur klebetechnisch, sondern zusätzlich auch kraft-, stoff- und/oder formschlüssig miteinander verbunden. Ein gegenseitiges Verschieben der miteinander verbundenen Bauteilkomponenten im nachfolgenden Fertigungsprozess wird absolut sicher verhindert.

Der vorher eingestellte Klebespalt bleibt erhalten, so dass die auf diese Weise miteinander verbundenen Bauteilkomponenten nunmehr einem kathodischen Tauchlackierungsprozess zugeführt werden können, wobei der Klebstoff während des sich anschließenden Trocknungsvorgangs der kathodischen Tauchlackierung gehärtet wird. Der Klebstoff kann vorher bereits teilweise gehärtet werden. Auch eine Nachhärtung ist möglich. Der wesentliche Vorteil der kathodischen Tauchlackierung ist, dass hierzu ein Trocknungsprozess bei zum Beispiel 180 °C über zum Beispiel 20 Minuten gehört, währenddessen der Klebstoff aushärten kann. Bei der kathodischen Tauchlackierung handelt es sich um einen im Karosseriebereich etablierten Fertigungsprozess, der bei solchen Bauteilen standardmäßig durchgeführt wird.

Durch die Verwendung von Klebstoff nimmt zwar das Bauteilgewicht geringfügig zu, allerdings können hierdurch die kraft-, form- und/oder stoffschlüssigen Kontaktpunkte in geringerer Anzahl oder größerem Abstand angeordnet werden. Durch weniger Kontaktpunkte oder formschlüssige Eingriffe reduziert sich der Fertigungsaufwand für die kraft-, form- und/oder stoffschlüssige Verbindung stärker als er durch die Klebeverbindung zunimmt. Dadurch ist im Ergebnis eine Kosteneinsparung und zugleich eine Gewichtsreduzierung möglich.

Die Kontaktpunkte können im Bereich der klebstoffbeschichteten Kontaktflächen liegen. Selbstverständlich kann wenigstens ein Kontaktpunkt auch außerhalb der klebstoffbeschichteten Kontaktfläche liegen. Es werden vorteilhafterweise wenigstens zwei, insbesondere wenigstens drei Kontaktpunkte gesetzt. Die Anzahl der Kontaktpunkte kann auch deutlich höher sein. Dadurch dass die Kontaktpunkte auch im Bereich der klebstoffbeschichteten Kontaktflächen liegen, wird der von den Kontaktflächen eingenommene Bereich optimal ausgenutzt, da sich die Klebstoffbeschichtung unmittelbar an den Fügebereich der Kontaktpunkte anschließt. Der Kontaktbereich zwischen den miteinander zu verbindenden Bauteilkomponenten kann daher theoretisch relativ klein gestaltet werden, ist bevorzugt aber möglichst groß, um eine maximale Verbindungsfläche zu schaffen. Wenn genügend Bauraum zur Verfügung steht, ist es selbstverständlich auch denkbar, die Kontaktpunkte außerhalb der klebstoffbeschichteten Kontaktflächen zu setzen.

Die Kontaktpunkte sind insbesondere als Punktschweißungen ausgeführt. Im Falle der formschlüssigen Verbindungen wird vor allem das Durchsetzfügen als vorteilhaft angesehen. Das Durchsetzfügen ist ein Verfahren zum Verbinden von Blechbauteilen ohne Zusatzwerkstoff. Die statische Festigkeit des Durchsetzfügens oder Clinchens liegt im Bereich von 2/3 bis hin zum 1,5-fachen einer vergleichbaren Punktschweißverbindung. Gleichzeitig ist die Dauerfestigkeit aufgrund von fehlender Kerbwirkung und nicht vorhandener Wärmeeinflusszone höher als bei Punktschweißverbindungen. Ein weiterer Vorteil ist, dass verschiedene Materialien und/oder Bleche gefügt werden können. Durch die druckknopfähnliche Form der Fügeverbindung, welche die Bauteilkomponenten kraftschlüssig miteinander verbindet, werden die Bauteilkomponenten sicher aneinander gehalten. Es können im Rahmen der Erfindung auch weitere Kaltfügeverfahren zur Anwendung kommen, wie zum Beispiel Nieten oder Stanznieten.

Damit während des Punktschweißens oder auch während des Herstellens der formschlüssigen Verbindung der Klebespalt nicht so weit zusammengedrückt wird, dass der Klebstoff vollständig herausgequetscht wird, ist in einer Weiterbildung des Verfahrens vorgesehen, dass Distanzhalter entfernt von den Kontaktpunkten angeordnet werden, um die klebstoffbeschichteten Kontaktflächen während der Ausbildung des Klebespaltes in einem definierten Abstand zueinander zu halten. Die Distanzhalter können Bestandteil einer Vorrichtung zur Durchführung des Verfahrens sein. Denkbar ist auch, dass es sich bei den Distanzhaltern um Ausprägungen in den Kontaktflächen oder im Randbereich der Kontaktflächen handelt, um die Dicke des Klebespaltes zu definieren.

Die Bauteilkomponenten sind als Lenkerschalen ausgeführt. Derartige Lenkerschalen besitzen insbesondere einen im Querschnitt U-förmig gestalteten Mittelteil mit von den Kontaktflächen wegweisenden, randseitigen Umstellungen. Die Kontaktflächen beginnen im Abstand von den Umstellungen. Dadurch besteht im Übergangsbereich von den Kontaktflächen zum äußeren Rand ein gewisser Freiraum, in welchem verdrängter Klebstoff ausweichen kann.

Es befindet sich zwischen den als Lenkerschalen ausgebildeten Bauteilkomponenten randseitig der Kontaktfläche ein Spalt, dessen Spaltbreite größer ist als die Spaltbreite des Klebespaltes. Überschüssiger Klebstoff kann dadurch in diesem verbreiterten Spalt entweichen. Zudem entsteht durch überschüssigen Klebstoff eine Klebstoffwulst, die das Eintreten von Flüssigkeiten oder Verschmutzungen zwischen die Kontaktflächen verhindert und einer etwaigen Korrosion vorbeugt. Schließlich wird das ganze Bauteil zusätzlich im Rahmen der kathodischen Tauchlackierungen mit einer vor Korrosion schützenden Beschichtung versehen.

Die miteinander zu verbindenden Bauteilkomponenten können aus denselben oder unterschiedlichen Werkstoffen bestehen, wie zum Beispiel Metall, insbesondere Stahl, GFK, CFK oder Kunststoffe, wobei die Wandstärken der Bauteilkomponenten durchaus voneinander abweichen können.

Die Erfindung wird nachfolgend, anhand eines in den Zeichnungen dargestellten Ausführungsbeispiels, näher erläutert. Es zeigt:
- Figur 1: ein Kraftfahrzeugbauteil in Form eines Lenkers in einer Draufsicht und;
- Figur 2: einen Schnitt entlang der Linie II. II. der Figur 1.

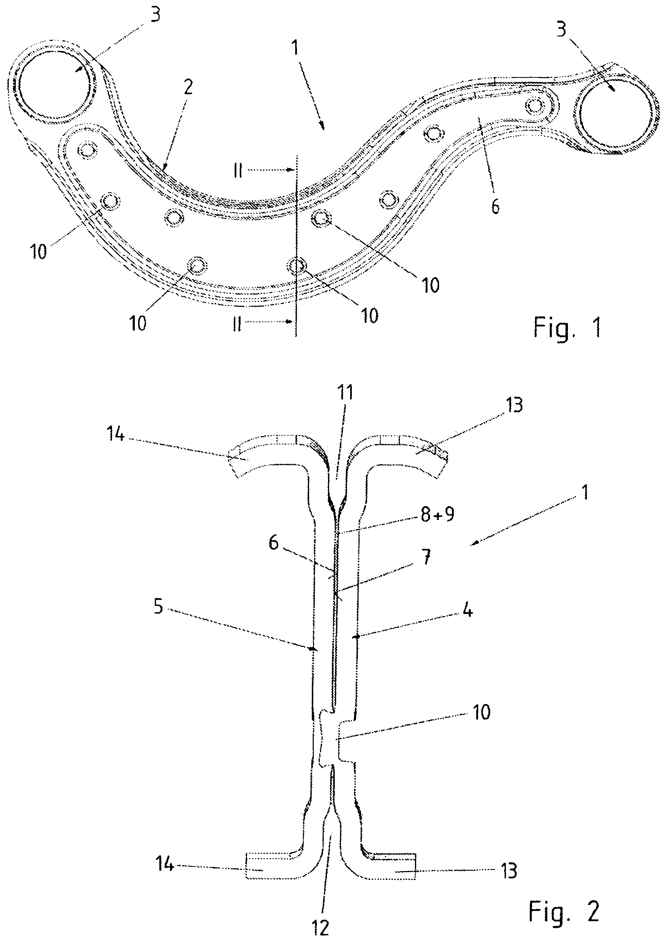

Das in Figur 1 dargestellte Kraftfahrzeugbauteil 1 ist ein Lenker mit einem U- bis S-förmig geschwungenen Mittelteil 2 und sich hieran jeweils endseitig anschließenden Lageraufnahmen 3. Die Lageraufnahmen 3 sind als kreisrunde Öffnungen ausgeführt. Aus der Schnittdarstellung der Figur 2 wird deutlich, dass sich das Kraftfahrzeugbauteil 1 aus zwei Bauteilkomponenten 4,5 zusammensetzt. Die beiden Bauteilkomponenten 4, 5 sind als im Querschnitt U-förmig gestaltete Blechprofile ausgebildet. Sie bestehen insbesondere aus Metall, insbesondere aus Stahl oder Aluminium, wobei weitere Werkstoffe und Werkstoffkombinationen möglich sind. Auch sind andere Querschnittsformen denkbar. Die beiden Bauteilkomponenten 4, 5 überlappen sich vollständig und sind bezüglich der zwischen den Bauteilkomponenten 4, 5 verlaufenden Teilungsebene quasi spiegelbildlich ausgebildet.

Die beiden Bauteilkomponenten 4, 5 besitzen einander gegenüberliegende Kontaktflächen 6, 7, die im Abstand zueinander angeordnet sind und einen mit einem Klebstoff abgefüllten Klebespalt 9 begrenzen. Der Klebespalt 9 besitzt eine wesentliche gleichbleibende Dicke und verläuft gerade zwischen den Kontaktflächen 6, 7. Die Kontaktflächen 6, 7 verlaufen parallel zueinander.

Im unteren Drittel der beiden Kontaktflächen 6, 7 befindet sich ein Kontaktpunkt 10, der als Durchsetzfügung die beiden Bauteilkomponenten 4, 5 zusätzlich zu der durch den Klebstoff 8 gebildeten Klebeverbindung formschlüssig miteinander verbindet. Der Kontaktpunkt 10, der auch als Clinchpunkt bezeichnet werden kann, wird dadurch hergestellt, dass durch einen Stempel unter plastischer Verformung eine druckknopfähnliche Form ausgebildet wird, welche die Bauteilkomponenten 4, 5 form- und im gewissen Umfang auch kraftschlüssig miteinander verbindet. Die Grenzen der Kontaktfläche 6 sind an einer umlaufenden Kante zu erkennen, welche im Abstand zur oberen und unteren Randseite des Kraftfahrzeugbauteils verläuft. Durch die druckknopfförmige Geometrie ergibt sich eine Hinterschneidung in der in der Bildebene linken Bauteilkomponente 5. In der in der Bildebene rechten Bauteilkomponente 4 ist dementsprechend eine Vertiefung zu erkennen. Die umgekehrte Anordnung ist ebenso möglich.

Im Bereich des Kontaktpunktes 10 ist der Klebstoff 8 verdrängt worden. Überschüssiger Klebstoff 8 kann in einen Spalt 11, 12 entweichen, der sich jeweils randseitig des Klebespaltes 9, das heißt außerhalb der Kontaktfläche 6, 7, anschließt. Dieser erweiterte Spalt 11, 12 besitzt eine mehrfach größere Spaltbreite als der Klebespalt 9.

Im Randbereich der Bauteilkomponenten 4 bis 5 befinden sich jeweils in entgegen gesetzte Richtungen weisende Umstellungen 13, 14, die von dem Spalt 11, 12 bzw. dem Klebespalt 9 wegweisen. Der randseitige Spalt 11, 12 erstreckt sich ausweislich der Figur 1 über die gesamte Länge des als Lenker ausgeführten Kraftfahrzeugbauteils 1. Figur 1 zeigt zudem, dass sämtliche Kontaktpunkte 10 innerhalb der Kontaktflächen 6, 7 verlaufen.

Die Kontaktpunkte 10 sind zickzackförmig zueinander versetzt angeordnet und befinden sich im Wechsel einmal näher an der Bildebene an dem oberen Spalt 11 und an dem unteren Spalt 12. Die Verteilung der Kontaktpunkte 10 erfolgt anforderungsgerecht, wobei in den schmaler werdenden Bereichen, benachbart den Lageraufnahmen 3, jeweils nur ein Kontaktpunkt 10 etwa mittig angeordnet ist. Die Breite des als Lenker ausgeführten Kfz-Bauteils 1 vergrößert sich jedoch in dem stärker gekrümmten Bereich, in welchem auch der Schnitt II.-II. liegt. Hier nimmt der Abstand der Kontaktpunkte 10 von einer neutralen Mittellinie zu.

Bei den Kontaktpunkten 10 kann es sich sowohl um Punktschweißungen handeln als auch um die dargestellten Durchsetzfügungen. Denkbar ist es auch, Durchsetzfügungen und Schweißpunkte miteinander zu kombinieren. Das auf diese Weise vorgefertigte Kfz-Bauteil 1 wird anschließend einer kathodischen Tauchlackierung zugeführt, wobei der Klebstoff 8 beim Trocknen der Tauchlackierung gehärtet wird.

### Bezugszeichen:

- 1 -: Kraftfahrzeugbauteil
- 2 -: Mittelteil
- 3 -: Lageraufnahme
- 4 -: Bauteilkomponente
- 5 -: Bauteilkomponente
- 6 -: Kontaktfläche
- 7 -: Kontaktfläche
- 8 -: Klebstoff
- 9 -: Klebespalt
- 10 -: Kontaktpunkt
- 11 -: Spalt
- 12 -: Spalt
- 13 -: Umstellung
- 14 -: Umstellung

## Patentansprüche

1. Kraftfahrzeugbauteil (1) in Form eines Lenkers eines Fahrwerks aus mehreren miteinander verbundenen Bauteilkomponenten (4,5) in Form von Lenkerschalen, wobei die Bauteilkomponenten (4, 5) im Bereich von Kontaktflächen (6, 7) miteinander verbunden sind und an wenigstens einem Kontaktpunkt (10) form- oder stoffschlüssig gefügt sind, wobei die als Lenkerschalen ausgeführten Bauteilkomponenten (4, 5) einen im Querschnitt U-förmig gestalteten Mittelteil (2) mit von den Kontaktflächen (6, 7) wegweisenden, randseitigen Umstellungen (13, 14) aufweisen, wobei die Kontaktflächen (6, 7) im Abstand von den Umstellungen (13, 14) beginnen, wobei zwischen den als Lenkerschalen ausgebildeten Bauteilkomponenten (4, 5) randseitig der Kontaktflächen (6, 7) ein Spalt (11, 12) ausgebildet ist, **dadurch gekennzeichnet, dass** die Bauteilkomponenten (4, 5) im Bereich der Kontaktflächen (6, 7) unter Ausbildung eines Klebespaltes (9) miteinander verklebt sind und dann an dem wenigstens einen Kontaktpunkt (10) kraft-, form- und/oder stoffschlüssig gefügt sind, wobei der verwendete Klebstoff (8) durch kathodische Tauchlackierung der miteinander verbundenen Bauteilkomponenten (4, 5) gehärtet ist, wobei die Spaltbreite des randseitigen Spalts (11, 12) größer ist als die Spaltbreite des Klebespaltes (9) zur Aufnahme überschüssigen Klebstoffs, um das Eintreten von Flüssigkeiten oder Verschmutzungen zwischen die Kontaktflächen (6, 7) zu verhindern.

2. Kraftfahrzeugbauteil nach Anspruch 1, **dadurch gekennzeichnet, dass** wenigstens ein Kontaktpunkt (10) als Durchsetzfügung ausgeführt ist.

3. Kraftfahrzeugbauteil nach Anspruch 1 oder 2, **dadurch gekennzeichnet, dass** wenigstens ein Kontaktpunkt (10) im Bereich der klebstoffbeschichteten Kontaktflächen (6, 7) liegt.

4. Kraftfahrzeugbauteil nach einem der Ansprüche 1 oder 2, **dadurch gekennzeichnet, dass** wenigstens ein Kontaktpunkt (10) außerhalb der klebstoffbeschichteten Kontaktfläche liegt.

5. Kraftfahrzeugbauteil nach einem der Ansprüche 1 bis 4, **dadurch gekennzeichnet, dass** wenigstens zwei Kontaktpunkte (10) vorhanden sind.

6. Kraftfahrzeugbauteil nach einem der Ansprüche 1 bis 5, **dadurch gekennzeichnet, dass** wenigstens ein Kontaktpunkt (10) als Punktschweißung ausgeführt ist.

7. Kraftfahrzeugbauteil nach einem der Ansprüche 1 bis 6, **dadurch gekennzeichnet, dass** der erweiterte Spalt (11, 12) randseitig der Kontaktflächen (6, 7) eine mehrfach größere Spaltbreite als der Klebespalt (9) besitzt.

## Claims

1. Motor vehicle component (1) in the form of a guide rod of a chassis comprising a plurality of structural components (4, 5) in the form of guide rod shells, wherein the components (4, 5) are joined together in the region of contact surfaces (6, 7) and are joined in a form-locking or material-locking manner at at least one contact point (10), wherein the components (4, 5) configured as guide rod shells have a middle section (2) that is U-shaped in cross section with edge transitions (13, 14) pointing away from the contact surfaces (6, 7), wherein the contact surfaces (6, 7) begin at a distance from the transitions (13, 14), wherein a gap (11, 12) is formed between the components (4, 5) designed as guide rod shells at the edge of the contact surfaces (6, 7), **characterised in that** the components (4, 5) are adhered to one another in the region of the contact surfaces (6, 7) with the formation of an adhesive gap (9) and then are joined in a force-fitting, form-fitting or and/or material-fitting manner at the at least one contact point (10), wherein the adhesive (8) used is hardened by the cathode immersion lacquering of the connected components (4, 5), wherein the gap width of the edge gap (11, 12) is greater than the gap width of the adhesive gap (9) to take in excess adhesive in order to prevent the inlet of liquid or dirt between the contact surfaces (6, 7).

2. Motor vehicle component according to claim 1, **characterised in that** at least one contact point (10) is designed as a clinching point.

3. Motor vehicle component according to either claim 1 or claim 2, **characterised in that** at least one contact point (10) is located in the region of the adhesive-coated contact surfaces (6, 7).

4. Motor vehicle component according to either claim 1 or claim 2, **characterised in that** at least one contact point (10) is located outside the adhesive-coated contacted surface.

5. Motor vehicle component according to one of claims 1 to 4, **characterised in that** at least two contact points (10) are provided.

6. Motor vehicle component according to one of claims 1 to 5, **characterised in that** at least one contact point (10) is configured as a spot weld.

7. Motor vehicle component according to one of claims 1 to 6, **characterised in that** the widened gap (11, 12) at the edge of the contact surfaces (6, 7) has a gap width several times greater than the adhesive gap (9).

## Revendications

1. Pièce de véhicule automobile (1) sous la forme d'un bras d'une suspension et composée de plusieurs éléments de pièce (4, 5) assemblés entre eux sous forme coques de bras, les éléments de pièce (4, 5) étant assemblés entre eux dans la zone de surfaces de contact (6, 7) et étant jointés par concordance de forme ou par liaison de matière en au moins un point de contact (10), les éléments de pièce (4, 5) réalisés comme des coques de bras ayant une partie médiane (2) conçue en forme de U en coupe transversale avec des parties renversées marginales (13, 14) qui pointent à l'opposé des surfaces de contact (6, 7), les surfaces de contact (6, 7) commençant à une certaine distance des parties renversées (13, 14), une fente (11, 12) étant conçue à la marge des surfaces de contact (6, 7) entre les éléments de pièce (4, 5) conçus comme des coques de bras, **caractérisée en ce que** les éléments de pièce (4, 5) sont collés ensemble dans la zone des surfaces de contact (6, 7) en formant une fente de collage (9) puis ils sont jointés par adhérence, par concordance de forme et/ou par liaison de matière en au moins le point de contact (10), la matière adhésive (8) utilisée étant durcie par immersion cathodique des éléments de pièce (4, 5) assemblés, la largeur de fente de la fente marginale (11, 12) étant supérieure à la largeur de fente de la fente de collage (9) pour recevoir de la matière adhésive en excès afin d'empêcher l'entrée de liquides ou de saletés entre les surfaces de contact (6, 7).

2. Pièce de véhicule automobile selon la revendication 1, **caractérisée en ce qu'**au moins un point de contact (10) est réalisé comme un clinchage.

3. Pièce de véhicule automobile selon la revendication 1 ou 2, **caractérisée en ce qu'**au moins un point de contact (10) se trouve dans la zone des surfaces de contact (6, 7) revêtues de matière adhésive.

4. Pièce de véhicule automobile selon la revendication 1 ou 2, **caractérisée en ce qu'**au moins un point de contact (10) se trouve en dehors de la surface de contact revêtue de matière adhésive.

5. Pièce de véhicule automobile selon l'une des revendications 1 à 4, **caractérisée en ce qu'**au moins deux points de contact (10) sont présents.

6. Pièce de véhicule automobile selon l'une des revendications 1 à 5, **caractérisée en ce qu'**au moins un point de contact (10) est réalisé comme une soudure par point.

7. Pièce de véhicule automobile selon l'une des revendications 1 à 6, **caractérisée en ce que** la fente élargie (11, 12) à la marge des surfaces de contact (6, 7) a une largeur de fente plusieurs fois supérieure à la fente de collage (9).
